(19) Europäisches Patentamt
European Patent Office
Office européen des brevets

(11) **EP 4 814 064 A1**

(12) **EUROPEAN PATENT APPLICATION**
published in accordance with Art. 153(4) EPC

(43) Date of publication:
**30.09.2026 Bulletin 2026/40**

(21) Application number: **24894019.9**

(22) Date of filing: **08.11.2024**

(51) International Patent Classification (IPC):
***C09D 5/44*** *(2006.01)* ***C09D 163/00*** *(2006.01)*

(52) Cooperative Patent Classification (CPC):
**C09D 5/44; C09D 163/00**

(86) International application number:
**PCT/JP2024/039774**

(87) International publication number:
**WO 2025/110027 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.11.2023 JP 2023199330**

(71) Applicant: **Nippon Paint Automotive Coatings Co., Ltd.**
**Hirakata-shi, Osaka 573-1153 (JP)**

(72) Inventors:
- **KOTANI, Masayuki**
  **Hirakata-shi, Osaka 573-1153 (JP)**
- **UEDA, Hirokazu**
  **Hirakata-shi, Osaka 573-1153 (JP)**

(74) Representative: **Mewburn Ellis LLP**
**Aurora Building**
**Counterslip**
**Bristol BS1 6BX (GB)**

# (54) CATIONIC ELECTRODEPOSITION COATING COMPOSITION AND METHOD FOR PRODUCING CATIONIC ELECTRODEPOSITION COATING COMPOSITION

(57) An object is to provide a cationic electrodeposition coating composition that has good low-temperature curability and can maintain coating film properties such as corrosion resistance. A cationic electrodeposition coating composition including an aminated epoxy resin (A) and a polyisocyanate curing agent (B), wherein the polyisocyanate curing agent (B) includes a blocked polyisocyanate compound (B1) of a polyisocyanate compound selected from the group consisting of 1,5-pentamethylene diisocyanate and a multimer of 1,5-pentamethylene diisocyanate.

EP 4 814 064 A1

## Description

### TECHNICAL FIELD

The present invention relates to a cationic electrodeposition coating composition and a method for producing a cationic electrodeposition coating composition.

### BACKGROUND ART

Cationic electrodeposition coating compositions are frequently used as undercoating materials for imparting corrosion resistance to industrial products such as automobiles. The cationic electrodeposition coating composition is generally an aqueous coating composition including an amino group-containing epoxy resin and a polyisocyanate curing agent, and has an advantage that it has only a small environmental load because it is an aqueous composition.

In recent years, due to further increase in awareness of environmental problems, low-temperature curability is also required for aqueous coating compositions. For example, WO 2019/039467 A (Patent Document 1) describes that low-temperature curability can be improved by the use of emulsion particles containing a Michael addition reaction donor component and emulsion particles containing a Michael addition reaction acceptor component in a cationic electrodeposition coating composition.

### PRIOR ART DOCUMENT

### PATENT DOCUMENT

Patent Document 1: WO2019/039467 A

### SUMMARY OF THE INVENTION

### PROBLEMS TO BE SOLVED BY THE INVENTION

An object of the present invention is to provide a cationic electrodeposition coating composition that has good low-temperature curability and can also maintain coating film properties such as corrosion resistance.

### SOLUTIONS TO THE PROBLEMS

To solve the problems described above, the present invention provides the following embodiments.

[1] A cationic electrodeposition coating composition comprising an aminated epoxy resin (A) and a polyisocyanate curing agent (B),

wherein the polyisocyanate curing agent (B) includes a blocked polyisocyanate compound (B1) of a polyisocyanate compound selected from the group consisting of 1,5-pentamethylene diisocyanate and a multimer of 1,5-pentamethylene diisocyanate, and
an equivalent ratio NCO/OH of a hydroxy group equivalent of the aminated epoxy resin (A) and an isocyanate group equivalent of the polyisocyanate curing agent (B) is 0.5 or more and less than 3.1.

[2] The cationic electrodeposition coating composition according to [1], wherein the blocking agent used in preparation of the blocked polyisocyanate compound (B1) includes one or more selected from the group consisting of an oxime compound, a pyrazole compound, an imidazole compound, and a triazole compound.
[3] The cationic electrodeposition coating composition according to [1] or [2], wherein a cured coating film resulting from curing, at 135°C for 25 minutes, an aminated epoxy resin emulsion being a mixture of the aminated epoxy resin (A) and the polyisocyanate curing agent (B) has a Tg measured by dynamic viscoelasticity measurement of 65°C or more and 95°C or less.
[4] A method for producing a cationic electrodeposition coating composition, comprising the steps of:

preparing a blocked polyisocyanate compound (B1); and
mixing a polyisocyanate curing agent (B) including the blocked polyisocyanate compound (B1) with an aminated epoxy resin (A) to prepare an aminated epoxy resin emulsion;
wherein the blocked polyisocyanate compound (B1) is prepared by blocking a polyisocyanate compound

selected from the group consisting of 1,5-pentamethylene diisocyanate and a multimer of 1,5-pentamethylene diisocyanate with a blocking agent; and
the blocking agent includes one or more selected from the group consisting of an oxime compound, a pyrazole compound, an imidazole compound, and a triazole compound.

EFFECTS OF THE INVENTION

In the present invention, due to the fact that the blocked polyisocyanate compound (B1) of a polyisocyanate compound selected from the group consisting of 1,5-pentamethylene diisocyanate and a multimer of 1,5-pentamethylene diisocyanate is contained as the polyisocyanate curing agent (B), and the equivalent ratio NCO/OH of the hydroxy group equivalent of the aminated epoxy resin (A) and the isocyanate group equivalent of the polyisocyanate curing agent (B) is 0.5 or more and less than 3.1, there is an advantage that coating film properties such as corrosion resistance can be secured and good low-temperature curability can be exhibited.

DETAILED DESCRIPTION

The cationic electrodeposition coating composition of the present disclosure includes an aminated epoxy resin (A) and a polyisocyanate curing agent (B), wherein the polyisocyanate curing agent (B) includes a blocked polyisocyanate compound (B1) of a polyisocyanate compound selected from the group consisting of 1,5-pentamethylene diisocyanate and a multimer thereof, and the equivalent ratio NCO/OH of the hydroxy group equivalent of the aminated epoxy resin (A) and the isocyanate group equivalent of the polyisocyanate curing agent (B) is 0.5 or more and less than 3.1. In the following, the respective features will be described in detail.

Aminated epoxy resin (A)

The aminated epoxy resin (A) is a coating film-forming resin. In the aminated epoxy resin (A), at least one oxirane ring (also referred to as "epoxy group") of the epoxy resin has been aminated. Preferably, the aminated epoxy resin (A) is included in the electrodeposition coating composition in the form of a resin emulsion together with the polyisocyanate curing agent (B).
The number average molecular weight of the aminated epoxy resin (A) is, for example, 1,000 or more and 7,000 or less. When the number average molecular weight is 1,000 or more, the rust prevention property and solvent resistance of a resulting cured electrodeposition coating film are easily improved. When the number average molecular weight is 7,000 or less, it becomes easy to adjust the viscosity of the aminated epoxy resin (A) and becomes possible to perform smooth synthesis, and it becomes easy to perform emulsification and dispersion of the resulting aminated epoxy resin (A). The number average molecular weight of the aminated epoxy resin (A) may be 1,500 or more and 4,000 or less.
The number average molecular weight of the aminated epoxy resin (A) is a value in terms of styrene homopolymer measured using gel permeation chromatography.
The amine value of the aminated epoxy resin (A) is, for example, 20 mg KOH/g or more and 100 mg KOH/g or less. When the amine value of the aminated epoxy resin (A) is 20 mg KOH/g or more, the stability of the emulsification and dispersion of the aminated epoxy resin (A) in the coating composition is good. When the amine value is 100 mg KOH/g or less, amino groups are present in a proper number in a cured electrodeposition coating film, so that the deterioration of the water resistance of the coating film is inhibited. The amine value of the aminated epoxy resin (A) may be 20 mg KOH/g or more and 80 mg KOH/g or less.
The amine value can be determined by the following method in accordance with ASTM D2073.

(1) In a 200 ml Erlenmeyer flask, 500 mg of the aminated epoxy resin is precisely weighed.
(2) About 50 ml of glacial acetic acid is added and the sample is homogeneously dissolved.
(3) Five or six drops of an indicator (methyl violet solution) are added, and the mixture is uniformly stirred.
(4) The mixture is titrated with a 0.1 N perchloric acid solution in acetic acid, and the point at which the color becomes bright green is defined as an end point.

(The above (3) and (4) may be replaced by potentiometric titration.)
The aminated epoxy resin (A) may have hydroxy groups, and the hydroxyl value of the aminated epoxy resin (A) is, for example, 150 mg KOH/g or more and 650 mg KOH/g or less. When the hydroxyl value is 150 mg KOH/g or more, the curability of the coating composition is enhanced, and the coating film appearance is improved. When the hydroxyl value is 650 mg KOH/g or less, hydroxy groups remain in a proper number in a cured electrodeposition coating, and the water resistance of the coating film is likely to be improved. In one embodiment, the hydroxyl value of the aminated epoxy resin (A) is 150 mg KOH/g or more, 180 mg KOH/g or more, 200 mg KOH/g or more, 250 mg KOH/g or more, 300 mg KOH/g or

more, 350 mg KOH/g or more, 400 mg KOH/g or more, 450 mg KOH/g or more, 500 mg KOH/g or more, 550 mg KOH/g or more, or 600 mg KOH/g or more. In another embodiment, the hydroxyl value of the aminated epoxy resin (A) component is 650 mg KOH/g or less, 600 mg KOH/g or less, 550 mg KOH/g or less, 500 mg KOH/g or less, 450 mg KOH/g or less, 400 mg KOH/g or less, 350 mg KOH/g or less, 300 mg KOH/g or less, 250 mg KOH/g or less, or 200 mg KOH/g or less. In still another embodiment, the hydroxyl value of the component (A) is 180 to 300 mg KOH/g.

The hydroxyl value can be determined by a neutralization titration method using an aqueous potassium hydroxide solution described in JIS K 0070.

In particular, when the aminated epoxy resin (A) has a number average molecular weight in the range of 1,000 to 7,000, an amine value of 20 to 100 mg KOH/g, and a hydroxyl value of 150 to 650 mg KOH/g (preferably 150 to 400 mg KOH/g), the rust prevention property of an article to be coated is likely to be further improved.

The coating composition may include a plurality of aminated epoxy resins (A) differing from each other in amine value and/or hydroxyl value. In this case, the average amine value and the average hydroxyl value calculated on the basis of the mass ratio of the plurality of aminated epoxy resins (A) are preferably included in the above ranges. In particular, the plurality of aminated epoxy resins (A) preferably include an aminated epoxy resin having an amine value of 20 to 50 mg KOH/g and a hydroxyl value of 50 to 300 mg KOH/g and an aminated epoxy resin having an amine value of 50 to 200 mg KOH/g and a hydroxyl value of 200 to 500 mg KOH/g. As a result, the core part of the emulsion becomes more hydrophobic and the shell part becomes more hydrophilic, so that the rust prevention property of an article to be coated is likely to be further improved.

The aminated epoxy resin (A) is obtained by reacting epoxy groups of the epoxy resin with an amine compound.

(Epoxy resin)

The epoxy resin which is a starting material of the aminated epoxy resin (A) is, for example, a polyphenol polyglycidyl ether type epoxy resin, which is a reaction product of a polycyclic phenol compound and epichlorohydrin. Examples of the polycyclic phenol compound include bisphenol A, bisphenol F, bisphenol S, phenol novolac, and cresol novolac. In this description, the term "polyphenol polyglycidyl ether type epoxy resin" includes a state where a polyphenol polyglycidyl ether type epoxy resin and the polycyclic phenol compound have undergone a reaction alternately and continuously and the polymer chain has been extended.

As the epoxy resin, one obtained by subjecting a part of the epoxy resin to a chain extension reaction before modification with an amine compound may be used. For the chain extension reaction, for example, a bifunctional polyester polyol, a polyether polyol, or a dibasic carboxylic acid can be used. Examples of the polyether polyol include a polyol having a polyethylene oxide group and a polyol having a polypropylene oxide group. Accordingly, for example, when a chain extension reaction is conducted using a polyol having a polypropylene oxide group, a polypropylene oxide group-containing epoxy resin is formed. The content of the polypropylene oxide group-containing epoxy resin is preferably 1 to 40 parts by mass, and more preferably 15 to 25 parts by mass based on 100 parts by mass of the epoxy resin. Examples of the epoxy resin that is the same embodiment as the polypropylene oxide group-containing epoxy resin include a polyphenol polyglycidyl ether type epoxy resin and an epoxy resin obtained by a chain extension reaction of a polycyclic phenol compound and a polypropylene oxide group-containing epoxy resin.

The aminated epoxy resin (A) is obtained by reacting epoxy groups of the epoxy resin with an amine compound. The epoxy groups of the epoxy resin are entirely consumed by the reaction with the amine compound, and substantially no epoxy groups remain in the molecule of the aminated epoxy resin (A).

(Amine compound)

As the amine compound, an amine compound generally used in the production of an aminated epoxy resin is used. Examples of the amine compound to be generally used include primary amines such as butylamine, octylamine, and monoethanolamine; secondary amines such as diethylamine, dibutylamine, methylbutylamine, diethanolamine, and N-methylethanolamine; and composite amines such as diethylenetriamine. The primary amine forms a ketimine group using a ketone compound, and can control the reaction by so-called blocking. Examples of the amine compound having a ketimine group or a diketimine group that can be used include a ketimine of aminoethylethanolamine and a diketimine of diethylenetriamine. Examples of the ketone compound that generates a ketimine group include methyl isopropyl ketone (MIPK), diisobutyl ketone (DIBK), methyl isobutyl ketone (MIBK), diethyl ketone (DEK), ethyl butyl ketone (EBK), ethyl propyl ketone (EPK), dipropyl ketone (DPK), and methyl ethyl ketone (MEK), and methyl isobutyl ketone (MIBK) is preferably used. A tertiary amine may be used as the amine compound, and specifically, examples thereof include triethylamine, N,N-dimethylbenzylamine, and N,N-dimethylethanolamine. These amines may be used singly, or two or more of them may be used in combination.

In the amination, the amine compound is preferably used in an amount of 0.9 equivalents or more and 1.2 equivalents or less per 1 equivalent of the epoxy group of the starting epoxy resin. The reaction conditions of the amination

may be appropriately chosen according to the reaction scale and the like. For example, the reaction may be performed at 80°C or more and 150°C or less for 0.1 hours or more and 5 hours or less, or at 120°C or more and 150°C or less for 0.5 hours or more and 3 hours or less.

In one embodiment of the present invention, an amine compound having at least one among a primary amino group, a secondary amino group, and a tertiary amino group excluding ketimines (including diketimines) is used as the amine compound that modifies the oxirane rings (also referred to as "epoxy groups") of the epoxy resin.

When it is necessary to narrow the molecular weight distribution of the aminated epoxy resin, especially when it is necessary to control the molecular weight distribution to 2.7 or less, selecting specific one as the amine compound is advantageous, for example, in that the molecular weight distribution can be easily controlled. Specifically, for example, there is an embodiment in which a combination of two types of a first amine and a second amine is used as the amine compound,

wherein the first amine has the formula:

NH2-(CH2)n-NR11R12 (1)

in the formula (1), R11 and R12 are the same or different and each represent an alkyl group having 1 to 6 carbon atoms and optionally having a hydroxy group at a terminal thereof, and n represents an integer of 2 to 4, and the second amine has the formula:

R13R14NH (2)

in the formula (2), R13 and R14 each represent an alkyl group having 1 to 4 carbon atoms and having a hydroxy group at a terminal thereof.

It is considered that when these amine compounds are used, first, primary amino groups of the first amine react with the epoxy resin to be consumed and, as a result, only secondary amino groups remain, and then the secondary amino groups react with epoxy groups of the epoxy resin, and therefore the reaction proceeds uniformly regardless of reactivity and the molecular weight distribution can be controlled. It is also conceivable that the tertiary amino group present in the first amine or the tertiary amino group generated through the reaction of the secondary amino group also reacts with the epoxy group to become a quaternary ammonium group, but this reaction is considered to occur in a small frequency.

The first amine is a compound having the above formula (1), wherein R11 and R12 are specifically methyl, ethyl, propyl, or butyl, and the first amine may have a hydroxy group at a terminal. n is 2 to 4, and preferably 3. Specifically, examples of the first amine include aminopropyldiethanolamine, dimethylaminopropanediamine, diethylaminopropanediamine, and dibutylaminopropanediamine. The second amine is a secondary amine having the above formula (2), wherein to the nitrogen atom are bonded R13 and R14, and both R13 and R14 are alkyl groups having 1 to 4 carbon atoms and having a hydroxy group. Specifically, examples of the second amine include dimethanolamine and diethanolamine.

In another embodiment of the present invention, the amine compound to be used for the amination may include an amine compound having a ketimine group or a diketimine group.

The coating composition may include an aminated resin other than the aminated epoxy resin (A), for example, an aminated acrylic resin or an aminated polyester resin, as necessary. The coating composition also may include a coating film-forming resin other than the aminated resin. Examples of such other coating film-forming resin include hydroxy group-containing acrylic resins, hydroxy group-containing polyester resins, urethane resins, butadiene-based resins, phenol resins, and xylene resins. Among all coating film-forming resins contained in the coating composition and being to react with a curing agent to form a coating film, 80% by mass or more, further 90% by mass or more, or particularly 100% by mass may be constituted of the aminated epoxy resin.

In one embodiment, there is an advantage that the weather resistance of the electrodeposition coating film can be enhanced by using the aminated epoxy resin and the aminated acrylic resin in combination. The aminated acrylic resin (B) can be prepared by copolymerization of an amino group-containing acrylic monomer, a hydroxy group-containing acrylic monomer, and other ethylenically unsaturated monomers. The aminated acrylic resin (B) can also be prepared by copolymerizing an epoxy group-containing acrylic monomer instead of the amino group-containing acrylic monomer with a hydroxy group-containing acrylic monomer and other ethylenically unsaturated monomers, and ring-opening the epoxy group of the resulting copolymer with an amine.

Polyisocyanate curing agent (B)

The polyisocyanate curing agent (B) (hereinafter sometimes referred simply to as curing agent (B)) is a component that preferentially reacts with amine groups of the aminated epoxy resin (A), and further reacts with hydroxy

groups to cure the aminated epoxy resin (A) and constitute an electrodeposition coating film. The polyisocyanate curing agent (B) of the present disclosure includes a blocked polyisocyanate compound (B1) of a polyisocyanate compound selected from the group consisting of 1,5-pentamethylene diisocyanate and a multimer of 1,5-pentamethylene diisocyanate. The above configuration is advantageous in that good coating film properties of an electrodeposition coating film such as corrosion resistance can be secured, and good low-temperature curability can be obtained.

Use of a blocked polyisocyanate of hexamethylene diisocyanate and/or a multimer thereof in the polyisocyanate curing agent (B) has been conventionally studied. For example, a blocked polyisocyanate of hexamethylene diisocyanate and/or a multimer thereof can impart flexibility to an electrodeposition coating film, and can improve performance such as chipping resistance. However, while the blocked polyisocyanate of hexamethylene diisocyanate and/or a multimer thereof can impart flexibility, corrosion resistance may be poor as trade-off performance. In the present invention, it has been experimentally found that by the use of 1,5-pentamethylene diisocyanate and/or a multimer thereof, a problem with balance between flexibility and other performance such as corrosion resistance can be solved, and low-temperature curability is also improved, thereby accomplishing the present invention.

The use of 1,5-pentamethylene diisocyanate and/or a multimer thereof has, in addition to the above-described advantages, an advantage that an effect of reducing environmental load due to being a biomass-derived starting material (non-fossil starting material) can be obtained.

Examples of the multimer of 1,5-pentamethylene diisocyanate include an isocyanurate body, an adduct, a biuret body, a uretdione body, an allophanate body, and a prepolymer having an isocyanate residue of 1,5-pentamethylene diisocyanate. Examples of the prepolymer of 1,5-pentamethylene diisocyanate include a prepolymer (adduct) obtained by reacting 1,5-pentamethylene diisocyanate with a polyhydric alcohol such as ethylene glycol, propylene glycol, trimethylolpropane, or hexanetriol at an NCO/OH ratio of 2 or more.

The blocked polyisocyanate compound (B1) can be prepared by blocking a polyisocyanate compound selected from the group consisting of 1,5-pentamethylene diisocyanate and a multimer thereof with a blocking agent. Examples of the blocking agent include:

monohydric alkyl (or aromatic) alcohol compounds such as n-butanol, n-hexyl alcohol, 2-ethylhexanol, lauryl alcohol, phenol carbinol, and methylphenyl carbinol;
cellosolves such as ethylene glycol monohexyl ether and ethylene glycol mono-2-ethylhexyl ether;
polyether-type both-ended diol compounds such as polyethylene glycol, polypropylene glycol, and polytetramethylene ether glycol phenol;
polyester-type both-ended polyol compounds obtained from a diol such as ethylene glycol, propylene glycol, or 1,4-butanediol and a dicarboxylic acid such as oxalic acid, succinic acid, adipic acid, suberic acid, or sebacic acid;
phenol compounds such as para-t-butylphenol and cresol;
oxime compounds such as dimethyl ketoxime, methyl ethyl ketoxime, methyl isobutyl ketoxime, methyl amyl ketoxime, and cyclohexanone oxime;
pyrazole compounds such as 3,5-dimethylpyrazole;
imidazole compounds such as 2-ethyl-4-methylimidazole; and
lactam compounds typified by ε-caprolactam and γ-butyrolactam.

As the blocking agent used in the preparation of the blocked polyisocyanate compound (B1), it is preferable to use a blocking agent including one or more selected from the group consisting of an oxime compound, a pyrazole compound, an imidazole compound, and a triazole compound, and it is more preferable to use a blocking agent including an oxime compound. The use of these blocking agents in the preparation of the blocked polyisocyanate compound (B1) has an advantage that good low-temperature curability can be secured, and the performance balance of the physical properties of a resulting electrodeposition coating film can be suitably maintained.

The polyisocyanate curing agent (B) of the present disclosure may include another blocked polyisocyanate compound in addition to the blocked polyisocyanate compound (B1). Other blocked polyisocyanate compounds can be prepared by blocking a polyisocyanate compound other than 1,5-pentamethylene diisocyanate and a multimer thereof with a blocking agent. As the blocking agent, the above-described blocking agent can be used.

Examples of the polyisocyanate compound other than 1,5-pentamethylene diisocyanate and a multimer thereof include:

aliphatic polyisocyanate compounds having 3 to 12 carbon atoms such as hexamethylene diisocyanate (including a trimer), 2,2,4-trimethylhexane diisocyanate, and lysine diisocyanate;
alicyclic polyisocyanate compounds such as 1,4-cyclohexane diisocyanate (CDI), isophorone diisocyanate (IPDI), 4,4'-dicyclohexylmethane diisocyanate (hydrogenated MDI), methylcyclohexane diisocyanate, isopropylidenedicyclohexyl-4,4'-diisocyanate, 1,3-diisocyanatomethylcyclohexane (hydrogenated XDI), hydrogenated TDI, 2,5- or 2,6-bis(isocyanatomethyl)-bicyclo[2.2.1]heptane (also referred to as norbornane diisocyanate);

aromatic polyisocyanate compounds such as tolylene diisocyanate (TDI), diphenylmethane-4,4'-diisocyanate (MDI), polymethylene polyphenyl polyisocyanate (MDI multimer, polymeric MDI), p-phenylene diisocyanate, and naphthalene diisocyanate;

aliphatic polyisocyanate compounds having an aromatic ring such as xylylene diisocyanate (XDI) and tetramethylxylylene diisocyanate (TMXDI); and

modified products of these diisocyanates (urethanized products, carbodiimides, uretdiones, uretoimines, biurets, isocyanurate-modified products, and the like).

The polyisocyanate curing agent (B) of the present disclosure may include another blocked polyisocyanate compound in addition to the blocked polyisocyanate compound (B1). In one embodiment, the polyisocyanate curing agent (B) includes the blocked polyisocyanate compound (B1) and a blocked polyisocyanate compound of an aromatic polyisocyanate compound. In the above embodiment, the mass ratio of the blocked polyisocyanate compound (B1) to the blocked polyisocyanate compound of the aromatic polyisocyanate compound may be 5/95 to 95/5, 20/80 to 80/20, or 30/70 to 70/30 in terms of the mass ratio of (B1)/other blocked polyisocyanate compound.

The content of the polyisocyanate curing agent (B) in the cationic electrodeposition coating composition of the present disclosure is set in consideration of the structure and the like of a curable resin (specifically, for example, the aminated epoxy resin (A) and other curable resins according to necessity). Specifically, the curing agent is used in an amount sufficient for reacting with active hydrogencontaining functional groups such as a primary amino group, a secondary amino group, and a hydroxy group of the curable resin (typically, the aminated epoxy resin (A)). The curing agent is blended, for example, such that the solid component mass ratio of the curable resin to the polyisocyanate curing agent (B) (represented by curable resin/curing agent) is 90/10 to 50/50, more preferably 80/20 to 65/35. The fluidity and the curing rate of the electrodeposition coating composition are controlled by the solid component mass ratio of the curable resin to the curing agent.

The ratio NCO/OH of the isocyanate group equivalent of the polyisocyanate curing agent (B) to the hydroxy group equivalent of the aminated epoxy resin (A) is preferably 0.5 or more and less than 3.1. The isocyanate group equivalent is an equivalent of free isocyanate groups which are generated through dissociation of the blocking agent during heat curing and are to cure, and the hydroxy group equivalent of the aminated epoxy resin (A) is an equivalent of hydroxy groups which react with the isocyanate groups. The lower limit of the equivalent ratio is more preferably 0.6 or more, and the upper limit is more preferably 2.8 or less. Setting the equivalent ratio NCO/OH within the above range has an advantage that the electrodeposition coating film properties such as corrosion resistance can be further improved.

The coating composition may include a curing agent other than the polyisocyanate curing agent (B), as necessary. Examples of the other curing agent include an organic curing agent such as a melamine resin or a phenol resin, a silane coupling agent, and a metal curing agent. Among all the curing agents contained in the coating composition, 80% by mass or more, further 90% by mass or more, and particularly 100% by mass may be the polyisocyanate curing agent (B).

Mixture (resin emulsion) of aminated epoxy resin (A) and polyisocyanate curing agent (B)

One of the characteristics of the cationic electrodeposition coating composition of the present invention is preferably that a cured coating film formed by mixing the aminated epoxy resin (A) and the polyisocyanate curing agent (B) to form an aminated epoxy resin emulsion and subjecting this emulsion to curing (heat curing at 135°C for 25 minutes) has a Tg measured by dynamic viscoelasticity measurement of 65°C or more and 95°C or less. The dynamic Tg is for measuring stress and strain generated by applying strain or stress that changes (vibrates) with time to a sample, and, unlike normal Tg (glass transition temperature: this can be said to be a static glass transition temperature), that is different from those for measuring stress and strain generated by applying constant strain or constant stress that does not change with time. The dynamic glass transition temperature (dynamic Tg) is not significantly different from the value of the static glass transition temperature Tg (static Tg), but is different in that a strain or stress changing with time is applied. A preferred range of the dynamic Tg is 70°C to 90°C, and a more preferred range is 75°C to 85°C. When the dynamic Tg of the coating film formed from the aminated epoxy resin emulsion is lower than 65°C, the coating film is excessively soft, whereas when the dynamic Tg exceeds 95°C, the coating film is hard and brittle.

The dynamic Tg described in the present description can be obtained by measuring a measurement sample by the same method as a method for measuring Tg by normal dynamic viscoelasticity. A specific measurement method that can be used in the present invention may be a method in which a cured electrodeposition coating film formed on a substrate is peeled off using mercury and cut to prepare a measurement sample, and a dynamic viscoelasticity measurement is performed on the measurement sample. In this method, the prepared measurement sample is vibrated at a frequency of 11 Hz at a temperature raising rate of 2°C per minute in a temperature range of room temperature to 200°C, and its viscoelasticity is measured. The ratio ($\tan\delta$) of the loss modulus (E") to the storage modulus (E') thus measured is measured, and the dynamic Tg is measured as a temperature at which $\tan\delta$ takes a peak value when $\tan\delta$ is plotted against

temperature. Examples of the device for performing the dynamic viscoelasticity measurement include a dynamic viscoelasticity analyzer (Rheogel-E4000: manufactured by UBM Co., Ltd.).

Other Components

The cationic electrodeposition coating composition of the present disclosure may, as necessary, include components other than the components described above. Examples of such other components include a pigment, a curing catalyst, and an additive.

<Pigment>

The pigment is a pigment that is commonly used in coating compositions. Examples of the pigment include coloring pigments such as titanium white (titanium dioxide), carbon black, and red iron oxide; extender pigments such as kaolin, talc, aluminum silicate, calcium carbonate, mica, and clay; and antirust pigments such as iron phosphate, aluminum phosphate, calcium phosphate, aluminum tripolyphosphate, aluminum phosphomolybdate, and aluminum zinc phosphomolybdate. From the viewpoint that the edge part rust prevention property can be further improved, the coating composition may include an extender pigment.

The solid component of a coating composition means all components that are contained in the coating composition and remain in the form of solid even through removal of a solvent. The solid component of a coating composition specifically includes the aminated epoxy resin (A) and the polyisocyanate curing agent (B) contained in the coating composition, and solid components such as a pigment, a pigment dispersion resin, an additive, or the like contained, as necessary.

The pigment is usually added to the coating composition in the form of a pigment dispersion paste including a pigment dispersion resin and the pigment.

(Pigment dispersion resin)

The pigment dispersion resin is a resin for dispersing a pigment. Examples of the pigment dispersion resin include pigment dispersion resin having a cationic group, such as a modified epoxy resin having at least one member selected from the group consisting of a quaternary ammonium group, a tertiary sulfonium group, and a primary amino group. Specifically, examples of the pigment dispersion resin include a quaternary ammonium group-containing epoxy resin and a tertiary sulfonium group-containing epoxy resin. Examples of an aqueous solvent include ion-exchanged water and ion-exchanged water containing a small amount of alcohols.

(Curing catalyst)

The coating composition may include a curing catalyst. The curing catalyst is not particularly limited, and those known in the coating material field can be used. Examples of the curing catalyst include an organotin compound and a bismuth compound. Examples of the organotin compound include dibutyltin oxide, dioctyltin oxide, dioctyltin dilaurate, dibutyltin dilaurate, dioctyltin dilaurate, dibutyltin diacetate, dibutyltin dibenzoate, and dioctyltin dibenzoate. Examples of the bismuth compound include bismuth oxide, bismuth hydroxide, bismuth subsalicylate, and bismuth subnitrate. In one preferred embodiment of the cationic electrodeposition coating composition of the present disclosure, a curing catalyst including a bismuth compound can be used.

From the viewpoint of environmental load, the content of the curing catalyst (in particular, an organotin compound) may be 0.5% by mass or less, and may be 0.25% by mass or less based on the solid component of the coating composition.

(Metal nitrite)

The coating composition may further include a metal nitrite. The metal nitrite can further improve the edge part rust prevention property. As the metal nitrite, a nitrite of an alkali metal or a nitrite of an alkaline earth metal is preferable, and a nitrite of an alkaline earth metal is more preferable. Examples of the metal nitrite include calcium nitrite, sodium nitrite, potassium nitrite, magnesium nitrite, strontium nitrite, barium nitrite, and zinc nitrite.

The content of the metal nitrite is, for example, 0.001% by mass or more and 0.2% by mass or less in terms of the metal element of the metal component based on the total mass of the coating film-forming resin and the curing agent.

(Additive, etc.)

The coating composition may, as necessary, include additives commonly used in the coating material field, for example, organic solvents, drying inhibitors, surfactants such as antifoaming agents, viscosity modifiers such as acrylic resin fine particles, cissing inhibitors, and inorganic rust inhibitors. Examples of the organic solvent include ethylene glycol monobutyl ether, ethylene glycol monohexyl ether, ethylene glycol monoethylhexyl ether, propylene glycol monobutyl ether, dipropylene glycol monobutyl ether, and propylene glycol monophenyl ether. Examples of the inorganic rust inhibitor include vanadium salts, copper, iron, manganese, magnesium, and calcium salts.

Besides the additives recited above, known auxiliary complexing agents, buffers, smoothing agents, stress relaxation agents, brighteners, semi-brighteners, antioxidants, ultraviolet absorbers, and the like may be included according to the intended purpose.

<Preparation of cationic electrodeposition coating composition>

The coating composition is obtained by first preparing the blocked polyisocyanate compound (B1) as described above, and then mixing a resin emulsion including a coating film-forming resin (typically, the aminated epoxy resin (A)) and a curing agent (typically, the polyisocyanate curing agent (B)), a pigment dispersion paste including a pigment, and an additive and the like according to necessity by a commonly used method to prepare a resin emulsion.

(Preparation of resin emulsion)

As one embodiment of the preparation of a resin emulsion, the resin emulsion can be prepared by dissolving the aminated epoxy resin (A) and other coating film-forming resins according to necessity, and the polyisocyanate curing agent (B) and other curing agents according to necessity each in an organic solvent to prepare solutions; mixing these solutions; and then neutralizing the mixed solution with a neutralizing acid.

Examples of the neutralizing acid include organic acids such as methanesulfonic acid, sulfamic acid, lactic acid, dimethylol propionic acid, formic acid, and acetic acid. The neutralizing acid may be one or more acids selected from the group consisting of formic acid, acetic acid, and lactic acid.

The solid component content of the resin emulsion is, for example, 25% by mass or more and 50% by mass or less, and preferably 35% by mass or more and 45% by mass or less, based on the total amount of the resin emulsion. The solid component of a resin emulsion means all components that are contained in the resin emulsion and remain in the form of solid even through removal of the solvent. Specifically, the solid component of a resin emulsion includes the aminated epoxy resin (A), the blocked polyisocyanate curing agent (B), and other solid components optionally added, which are contained in the resin emulsion.

The neutralizing acid may be used in an amount of 10% or more and 100% or less, or 20% or more and 70% or less, in terms of the ratio of the equivalent of the neutralizing acid to the equivalent of the amino groups of the aminated epoxy resin. Hereinafter, the ratio of the equivalent of the neutralizing acid to the equivalent of the amino groups of the aminated epoxy resin is referred to as a neutralization ratio. When the neutralization ratio is 10% or more, the affinity to water is secured and the dispersibility in water is improved.

(Method for preparing pigment dispersion paste)

The pigment dispersion paste is prepared by mixing a pigment dispersion resin and a pigment. The solid component mass of the pigment dispersion resin in the pigment dispersion paste is not particularly limited, and may be, for example, 20 parts by mass or more and 100 parts by mass or less based on 100 parts by mass of the pigment.

The solid component mass of the pigment dispersion paste is, for example, 40% by mass or more and 70% by mass or less, and may be 50% by mass or more and 60% by mass or less.

The solid component of a pigment dispersion paste means all components that are contained in the pigment dispersion paste and remain in the form of solid even through removal of a solvent. Specifically, the solid component of a pigment dispersion paste includes the pigment dispersion resin, the pigment, and other solid components optionally added, which are contained in the pigment dispersion paste.

[Method for producing electrodeposition coated article]

An article to be coated is subjected to electrodeposition coating using a coating composition, and an electrodeposition coating film is thereby formed.

An electrodeposition coated article with an electrodeposition coating film is produced by a method including a step of immersing an article to be coated in a cationic electrodeposition coating composition according to the present

embodiment, and then applying a voltage to between the article to be coated and a counter electrode to form an uncured electrodeposition coating film on the article to be coated; and a step of heating the coating film at a temperature of 75°C or more and 200°C or less to afford a cured electrodeposition coating film.

As described above, the cationic electrodeposition coating composition includes the aminated epoxy resin (A), the polyisocyanate curing agent (B), and a pigment, an additive, and the like according to necessity.

(1) Formation of uncured electrodeposition coating film

An article to be coated is immersed in a cationic electrodeposition coating composition, and then using the article to be coated as a cathode, a voltage is applied between the cathode and a counter electrode (anode). Thereby, an uncured electrodeposition coating film is deposited on the article to be coated.

(Application conditions)

The voltage is, for example, 50 V or more and 450 V or less. The bath liquid temperature is, for example, 10°C or more and 45°C or less. The period of time for applying the voltage is not particularly limited, and is, for example, 2 minutes or more and 5 minutes or less.

(Article to be coated)

The material of the article to be coated is not particularly limited as long as it can conduct electricity. The shape of the article to be coated is also not particularly limited, and may be either a flat plate shape or a complicated three-dimensional shape. Examples of the article to be coated include cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based plated steel sheets, tin-based plated steel sheets, and those subjected to chemical conversion treatment (e.g., surface treatment using a phosphate salt, a zirconium salt, or the like). When the chemical conversion treatment is performed with a phosphate salt, the article to be coated may be subjected to a surface conditioning treatment with a zinc-based, titanium-based, or manganese-based surface conditioning agent before the chemical conversion treatment. As a result, the crystal of a zinc phosphate film becomes denser.

(2) Curing of electrodeposition coating film

The uncured electrodeposition coating film formed is washed with water, as necessary, and then heated at a temperature of 75°C or more and 200°C or less. As a result, a curing reaction occurs, and a cured electrodeposition coating film is obtained.

(Curing conditions)

The curing temperature may be 100°C or more, and may be 110°C or more. The curing temperature may be, for example, 180°C or less, and may be 150°C or less. The heating time is not particularly limited, and is, for example, 10 minutes to 30 minutes.

(Electrodeposition coated article)

The electrodeposition coated article includes an article to be coated and, on the article to be coated, a cured electrodeposition coating film formed from the cationic electrodeposition coating composition described above.

From the viewpoint of rust prevention property, the thickness of the electrodeposition coating film after curing may be 5 μm or more and 60 μm or less. The thickness of the electrodeposition coating film after curing may be 10 μm or more. The thickness of the electrodeposition coating film after curing may be 25 μm or less.

The cationic electrodeposition coating composition of the present disclosure has an advantage that when a curing agent including a blocked polyisocyanate compound (B1) of a polyisocyanate compound selected from the group consisting of 1,5-pentamethylene diisocyanate and a multimer of 1,5-pentamethylene diisocyanate is used as the polyisocyanate curing agent (B), coating film properties such as corrosion resistance can be secured, and low-temperature curability can also be achieved. The cationic electrodeposition coating composition of the present disclosure can be suitably used in a coating mode in which the formation of an intermediate coating film and/or a top coating film, which is commonly formed on an electrodeposition coating film, is omitted, for example, coating of a specific part or component of

an automobile body.

EXAMPLES

The present invention will be described hereafter in more detail by way of examples, to which the present invention is not intended to be limited. In the examples, "parts" and "%" are on a mass basis unless otherwise indicated.

Production Example 1 Production of aminated epoxy resin (A)

First, 92 parts of methyl isobutyl ketone, 940 parts of a bisphenol A-type epoxy resin (trade name: DER-331J, produced by The Dow Chemical Company), 382 parts of bisphenol A, 63 parts of octylic acid and 2 parts of dimethylbenzylamine were added, and then the mixture was reacted until the epoxy equivalent was 1145 g/eq while the temperature in the reaction vessel was held at 140°C, and then cooling was performed until the temperature in the reaction vessel was 120°C. A mixture of 78 parts of diethylenetriamine diketimine (methyl isobutyl ketone solution having a solid content of 73%) and 92 parts of diethanolamine was then added, and the mixture was reacted at 120°C for 1 hour, affording an aminated epoxy resin (A) (cationically modified epoxy resin). The resin had a number average molecular weight of 2,560, an amine value of 56 mg KOH/g, and a hydroxyl value of 186 mg KOH/g.

Production Example 2-1 Production of blocked polyisocyanate curing agent (curing agent B1-1)

A reaction vessel was charged with 1540 parts of 1,5-pentamethylene diisocyanate (PDI) and 732 parts of MIBK, and the mixture was heated to 60°C. A solution of 346 parts of trimethylolpropane dissolved in 1067 parts of MEK oxime was added dropwise thereto at 60°C over 2 hours. Further, the mixture was heated at 75°C for 4 hours, disappearance of an absorption based on an isocyanate group was then confirmed in IR spectrum measurement. The mixture was allowed to cool, and 101 parts of MIBK was then added, affording a blocked polyisocyanate curing agent (B1-1) having a solid content of 78%. This blocked polyisocyanate curing agent had an NCO equivalent of 148.

Production Example 2-2 Production of blocked polyisocyanate curing agent (curing agent B1-2)

A reaction vessel was charged with 143.3 parts of an isocyanurate body of 1,5-pentamethylene diisocyanate and 24 parts of MIBK, and the mixture was heated to 60°C. 75 parts of methyl ethyl ketoxime (MEK oxime) was added dropwise thereto over 2 hours. Further, the mixture was heated at 70°C for 2 hours, disappearance of an absorption based on an isocyanate group was then confirmed in IR spectrum measurement. Thereafter, 36 parts of butyl cellosolve was added, affording a blocked polyisocyanate curing agent (B1-2) having a solid content of 78%. This blocked polyisocyanate curing agent had an NCO equivalent of 256.

Production Example 2-3 Production of blocked polyisocyanate curing agent (curing agent B1-3)

A reaction vessel was charged with 1340 parts of 4,4'-diphenylmethane diisocyanate and 277 parts of MIBK, which were then heated to 80°C, and a solution of 226 parts of ε-caprolactam in 944 parts of butyl cellosolve was then added dropwise at 80°C over 2 hours. Further, the mixture was heated at 100°C for 4 hours, disappearance of an absorption based on an isocyanate group was then confirmed in IR spectrum measurement, the mixture was allowed to cool, and 349 parts of MIBK was then added, affording a blocked polyisocyanate curing agent (B1-3) (solid content: 80%). This blocked polyisocyanate curing agent had an NCO equivalent of 251.

Production Example 2-4 Production of blocked polyisocyanate curing agent (curing agent B1-4)

A reaction vessel was charged with 1680 parts of hexamethylene diisocyanate (HDI) and 732 parts of MIBK, and the mixture was heated to 60°C. A solution of 346 parts of trimethylolpropane dissolved in 1067 parts of MEK oxime was added dropwise thereto at 60°C over 2 hours. Further, the mixture was heated at 75°C for 4 hours, disappearance of an absorption based on an isocyanate group was then confirmed in IR spectrum measurement. The mixture was allowed to cool, and 140 parts of MIBK was then added, affording a blocked isocyanate curing agent (B1-4) having a solid content of 78%. This blocked polyisocyanate curing agent had an NCO equivalent of 155.

Production Example 2-5 Production of blocked polyisocyanate curing agent (curing agent B1-5)

A reaction vessel was charged with 165 parts of an isocyanurate body of hexamethylene diisocyanate (trade name: SUMIDUR N3300, manufactured by Sumika Bayer Urethane Co., Ltd.) and 24 parts of MIBK, and the mixture was

heated to 60°C. 75 parts of methyl ethyl ketoxime (MEK oxime) was added dropwise thereto over 2 hours. Further, the mixture was heated at 70°C for 2 hours, disappearance of an absorption based on an isocyanate group was then confirmed in IR spectrum measurement. Thereafter, 44 parts of butyl cellosolve was added, affording a blocked polyisocyanate curing agent (B1-5) having a solid content of 78%. This blocked polyisocyanate curing agent had an NCO equivalent of 281.

Production Example 2-6 Production of blocked polyisocyanate curing agent (curing agent B1-6)

A reaction vessel was charged with 1540 parts of 1,5-pentamethylene diisocyanate (PDI), which was then heated to 60°C. A solution of 346 parts of trimethylolpropane dissolved in 732 parts of MIBK was added dropwise thereto at 60°C over 2 hours. Thereafter, 1178 parts of 3,5-dimethylpyrazole was slowly added at a temperature of 60 to 70°C. Further, the mixture was heated at 70°C for 2 hours, disappearance of an absorption based on an isocyanate group was then confirmed in IR spectrum measurement.

The mixture was allowed to cool, and 132 parts of MIBK was then added, affording a blocked polyisocyanate curing agent (B1-6) having a solid content of 78%. This blocked polyisocyanate curing agent had an NCO equivalent of 153.

Production Example 2-7 Production of blocked polyisocyanate curing agent (curing agent B1-7)

A reaction vessel was charged with 143.3 parts of an isocyanurate body of 1,5-pentamethylene diisocyanate and 24 parts of MIBK, and the mixture was heated to 60°C. 83 parts of 3,5-dimethylpyrazole was slowly added thereto at a temperature of 60 to 70°C. Further, the mixture was heated at 70°C for 2 hours, disappearance of an absorption based on an isocyanate group was then confirmed in IR spectrum measurement. Thereafter, 40 parts of butyl cellosolve was added, affording a blocked polyisocyanate curing agent (curing agent B1-7) having a solid content of 78%. This blocked polyisocyanate curing agent had an NCO equivalent of 265.

Production Example 3 Preparation of pigment dispersion resin

A reaction vessel equipped with a stirrer, a condenser tube, a nitrogen inlet tube, and a thermometer was charged with 2220 parts of isophorone diisocyanate and 342.1 parts of methyl isobutyl ketone. The temperature was raised to 50°C, 2.2 parts of dibutyltin laurate was further charged, the temperature was raised to 60°C, and 878.7 parts of methyl ethyl ketone oxime was further charged. Thereafter, the mixture was kept at 60°C for 1 hour and it was confirmed that the NCO equivalent was 348, and then 890 parts of dimethylethanolamine was further charged. Furthermore, the mixture was kept at 60°C for 1 hour, and it was confirmed that the NCO peak disappeared in IR. Then, while the mixture was cooled so as not to exceed 60°C, 1872.6 parts of 50% lactic acid and 495 parts of deionized water were added, affording a quaternizing agent.

A different reaction vessel was charged with 870 parts of tolylene diisocyanate and 49.5 parts of methyl isobutyl ketone. While the mixture was cooled so as not to be 50°C or more, 667.2 parts of 2-ethylhexanol was added dropwise to the reaction vessel over 2.5 hours. After completion of the dropwise addition, 35.5 parts of methyl isobutyl ketone was further added, and the temperature of the mixture was kept for 30 minutes. Thereafter, it was confirmed that the NCO equivalent was 330 to 370, and a half-blocked polyisocyanate was obtained.

A reaction vessel equipped with a stirrer, a condenser tube, a nitrogen inlet tube, and a thermometer was charged with 940.0 parts of a bisphenol A type epoxy resin (trade name: DER-331J, manufactured by The Dow Chemical Company) and 38.5 parts of methanol, and then 0.1 parts of dibutyltin dilaurate was further added. The mixture was heated to 50°C, 87.1 parts of tolylene diisocyanate was then added. Further, the mixture was heated to 100°C, 1.4 parts of N,N-dimethylbenzylamine was added, and then the mixture was kept at 130°C for 2 hours. At this time, methanol was fractionated with a fractionating column. The resulting mixture was cooled to 115°C, and methyl isobutyl ketone was charged until the solid concentration reached 90%. Thereafter, 270.3 parts of bisphenol A and 39.2 parts of 2-ethylhexanoic acid were charged, and the mixture was heated and stirred at 125°C for 2 hours. Subsequently, 516.4 parts of the half-blocked polyisocyanate was added dropwise over 30 minutes, and then the mixture was heated and stirred for 30 minutes. Further, 1506 parts of polyoxyethylene bisphenol A ether was slowly added, and the mixture was dissolved therein. After cooling to 90°C, the quaternizing agent was added, and the mixture was kept at 70 to 80°C. Thereafter, it was confirmed that the acid value was 2 or less, and then deionized water was added, affording a pigment dispersion resin (resin solid content: 30%).

Production Example 4 Preparation of pigment dispersion paste

A sand grinding mill was charged with 1,200 parts of the pigment dispersion resin obtained in Production Example

3, 3 parts of carbon black, 620 parts of kaolin, 500 parts of titanium dioxide, 70 parts of bismuth oxide, and 713 parts of deionized water, and then the mixture was dispersed until the particle size reached 10 μm or less, affording a pigment dispersion paste (solid content: 50%).

[Example 1]

Preparation of cationic electrodeposition coating composition

(Preparation of aminated epoxy resin emulsion)

400 parts (solid content) of the aminated epoxy resin (A) obtained in Production Example 1 was mixed with 600 parts (solid content) of the blocked polyisocyanate curing agent (B1-1) obtained in Production Example 2-1, and ethylene glycol mono-2-ethylhexyl ether was added in an amount of 3% based on the solid content. Next, the mixture was neutralized by adding formic acid such that a neutralization ratio of 40% was achieved, and slowly diluted by adding ion-exchanged water, thereby affording an aminated epoxy resin emulsion.

(Preparation of cationic electrodeposition coating composition)

To a stainless steel container were added 1666 parts of ion-exchanged water, 1172 parts of the aminated epoxy resin emulsion prepared as described above, and 330 parts of the pigment dispersion paste obtained in Production Example 4. Thereafter, the mixture was aged at 40°C for 16 hours, affording a cationic electrodeposition coating composition.

[Example 2] to [Example 6] and [Comparative Example 1] to [Comparative Example 6]

Cationic electrodeposition coating compositions were produced by the same procedure as in Example 1 except that the type and the amount of the blocked polyisocyanate curing agent were changed as described in Table 1.
Using the obtained cationic electrodeposition coating compositions, electrodeposition coated articles (mono-layer coating films) were prepared by the same procedure as in Example 1.
The following evaluations were conducted using the cationic electrodeposition coating compositions prepared in the examples and the comparative examples. The results of the evaluations are shown in the following table.

Preparation of electrodeposition coated article

A cold-rolled steel sheet (JIS G3141, SPCC-SD) was prepared as an article to be coated. The steel sheet was immersed in SURFCLEANER EC90 (manufactured by Nippon Paint Surf Chemicals Co., Ltd.) at 50°C for 2 minutes, thereby being degreased. Subsequently, the steel sheet was immersed in SURFDINE EC3200 (zirconium chemical conversion treatment agent manufactured by Nippon Paint Surf Chemicals Co., Ltd.) at 35°C for 90 seconds. The steel sheet was then rinsed with deionized water.
A required amount of 2-ethylhexyl glycol was added to the cationic electrodeposition coating composition obtained as described above such that the electrodeposition coating film had a thickness of 20 μm after curing, and the viscosity was thereby adjusted. The steel sheet was completely embedded in the cationic electrodeposition coating composition obtained, and application of a voltage was then immediately started. The voltage was applied under the condition that the voltage was raised for 30 seconds to reach 180 V and then held for 150 seconds. Thereby, an uncured electrodeposition coating film was deposited on the article to be coated. The resulting uncured electrodeposition coating film was heated and cured at 135°C for 25 minutes, affording an electrodeposition coated article with a cured electrodeposition coating film having a thickness of 20 μm. For the resulting electrodeposition coated article, the gel fraction (evaluation of low-temperature curability), solvent rubbing resistance and corrosion resistance were evaluated as follows, and the results are shown in Table 1. In Table 1, the equivalent ratio NCO/OH of the hydroxy group equivalent of the aminated epoxy resin (A) and the isocyanate group equivalent of the polyisocyanate curing agent (B) is also described.

Evaluation of low-temperature curability (measurement of gel fraction)

The electrodeposition coating film formed by the above procedure was placed in a Soxhlet extractor, extracted under acetone reflux conditions for 6 hours, and the gel fraction of the coating film was calculated in accordance with the following formula.

$$\text{Gel fraction (\%)} = [\text{mass after extraction (g)}/\text{mass before extraction (g)}] \times 100$$

The calculated gel fraction was evaluated according to the following criteria.

⊙: The gel fraction is 95% or more.
O: The gel fraction is 90% or more and less than 95%.
×: The gel fraction is less than 90%.

Evaluation of solvent resistance (solvent rubbing resistance)

The coating film of the electrodeposition coated sheet after curing was subjected to a rubbing test under a load of 500 g using a fabric containing a MIBK solvent, and the surface state of the coating film was observed.
The evaluation was conducted according to the following criteria.

○: Dull gloss does not occur on the coating film surface even when rubbing is reciprocated 30 times.
△: Dull gloss occurs on the coating film surface when rubbing is reciprocated 20 times.
×: Dull gloss occurs on the coating film surface when rubbing is reciprocated 10 times.

Corrosion resistance (Salt-solution Dipping Test (SDT))

On a coating film of an electrodeposition coated sheet after curing prepared using a cold-rolled steel sheet, cuts were made with a knife to reach the substrate, and the coated sheet was immersed in a 5% saline solution at 55°C for 240 hours. Then, a tape was peeled off, and the peeling width on both sides of the peeled site was measured. The measured peeling width was evaluated according to the following criteria.

Evaluation criteria

○: The peeling width is less than 12 mm.
△: The peeling width is 12 mm or more and less than 14 mm.
×: The peeling width is 14 mm or more.

Measurement of dynamic Tg of cured coating film of aminated epoxy resin emulsion

Each of the aminated epoxy resin emulsions prepared in Examples and Comparative Examples was electrodeposition coated on a tin plate for dynamic viscoelasticity measurement, and baked and cured at 135°C for 25 minutes, affording a cured electrodeposition coating film. The obtained coating film was peeled using mercury and cut to prepare a measurement sample. Using a dynamic viscoelasticity analyzer (Rheogel-E4000: manufactured by UBM Co., Ltd.), the viscoelasticity of a sample was measured by applying vibration to the sample from room temperature to 200°C at a temperature raising rate of 2°C per minute and at a frequency of 11 Hz. Then, the ratio (tanδ) of the loss modulus (E") to the storage modulus (E') was calculated, the temperature at which the peak value of the ratio was determined, and the dynamic Tg was determined.

[Table 1]

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Solid content of aminated epoxy resin (A) | | 40 | 65 | 40 | 65 | 65 | 65 | 40 | 65 | 40 | 65 | 75 | 27.1 |
| Solid content of blocked polyisocyanate curing agent (B) | Production Example 2-1 (Curing agent B1-1) | 60 | 15 | | | | | | | | | | |
| | Production Example 2-2 (Curing agent B1-2) | | | 60 | 15 | | | | | | | 10.7 | 31.2 |
| | Production Example 2-3 (Curing agent B1-3) | | 20 | | 20 | 20 | 20 | | 20 | | 20 | 14.3 | 41.7 |
| | Production Example 2-4 (Curing agent B1-4) | | | | | | | 60 | 15 | | | | |
| | Production Example 2-5 (Curing agent B1-5) | | | | | | | | | 60 | 15 | | |
| | Production Example 2-6 (Curing agent B1-6) | | | | | 15 | | | | | | | |
| | Production Example 2-7 (Curing agent B1-7) | | | | | | 15 | | | | | | |
| NCO/OH ratio | | 3.06 | 0.84 | 1.77 | 0.64 | 0.82 | 0.63 | 2.92 | 0.82 | 1.61 | 0.62 | 0.40 | 3.21 |

(continued)

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Evaluation | Gel fraction (%) | ⊙ | ○ | ⊙ | ○ | ○ | ○ | × | × | × | × | × | × |
| | Solvent rubbing resistance | ○ | ○ | ○ | ○ | ○ | ○ | Δ | × | Δ | × | × | × |
| | Corrosion resistance (mm) | ○ | ○ | ○ | ○ | ○ | ○ | × | Δ | × | Δ | × | × |
| | Dynamic Tg (°C) of cured coating film of aminated epoxy resin emulsion | 67 | 87 | 70 | 90 | 94 | 92 | 61 | 75 | 61 | 78 | 101 | 64 |

As is apparent from the results in Table 1 above, the cationic electrodeposition coating compositions (Example 1 and Example 3) in which a blocked product of 1,5-pentamethylene diisocyanate (Production Example 2-1) or a blocked product of a nurate body of 1,5-pentamethylene diisocyanate (Production Example 2-2) was used as a blocked isocyanate curing agent, and combinations (Example 2 and Example 4) of those cationic electrodeposition coating compositions and another blocked polyisocyanate compound (a blocked product of 4,4'-diphenylmethane diisocyanate of Production Example 2-3) were superior in gel fraction, solvent rubbing resistance and corrosion resistance. In Examples 5 and 6, which are the cases where a pyrazole compound (specifically, 3,5-dimethylpyrazole) was used as the blocking agent of the blocked polyisocyanate, and there was no change in performance even when the blocking agent was changed. On the other hand, in Comparative Example 1, which is an example of using a blocked product of hexamethylene diisocyanate as a curing agent, the gel fraction and the corrosion resistance were very poor. In Comparative Example 2, which is a combination of a blocked product of 4,4'-diphenylmethane diisocyanate and a blocked product of hexamethylene diisocyanate, the gel fraction and the solvent rubbing resistance were very poor. In Comparative Example 3, which is an example of using a blocked product of an isocyanurate body of hexamethylene diisocyanate as a curing agent, the gel fraction and the corrosion resistance were very poor. In Comparative Example 4, which is an example of using a combination of a blocked product of 4,4'-diphenylmethane diisocyanate and a blocked product of an isocyanurate body of hexamethylene diisocyanate as a curing agent, the gel fraction and the solvent rubbing resistance were very poor. In Comparative Examples 5 and 6, since the NCO/OH ratio was not in an appropriate range, all of the performances were not good. The range of the dynamic Tg of the cured coating film of the aminated epoxy resin emulsion was excessively high in Comparative Example 5 and excessively low in Comparative Example 6.

## INDUSTRIAL APPLICABILITY

The cationic electrodeposition coating composition of the present disclosure has an advantage that the cationic electrodeposition coating composition has good low-temperature curability and can maintain coating film properties such as corrosion resistance. The cationic electrodeposition coating composition of the present disclosure further has an advantage that an environmental load reduction effect due to the fact that the cationic electrodeposition coating composition is prepared from a biomass-derived starting material (non-fossil starting material) can be obtained.

## Claims

1. A cationic electrodeposition coating composition comprising an aminated epoxy resin (A) and a polyisocyanate curing agent (B),

   wherein the polyisocyanate curing agent (B) includes a blocked polyisocyanate compound (B1) of a polyisocyanate compound selected from the group consisting of 1,5-pentamethylene diisocyanate and a multimer of 1,5-pentamethylene diisocyanate, and
   an equivalent ratio NCO/OH of a hydroxy group equivalent of the aminated epoxy resin (A) and an isocyanate group equivalent of the polyisocyanate curing agent (B) is 0.5 or more and less than 3.1.

2. The cationic electrodeposition coating composition according to claim 1, wherein the blocking agent used in preparation of the blocked polyisocyanate compound (B1) includes one or more selected from the group consisting of an oxime compound, a pyrazole compound, an imidazole compound, and a triazole compound.

3. The cationic electrodeposition coating composition according to claim 1 or 2, wherein a cured coating film resulting from curing, at 135°C for 25 minutes, an aminated epoxy resin emulsion being a mixture of the aminated epoxy resin (A) and the polyisocyanate curing agent (B) has a Tg measured by dynamic viscoelasticity measurement of 65°C or more and 95°C or less.

4. A method for producing a cationic electrodeposition coating composition, comprising the steps of:

   preparing a blocked polyisocyanate compound (B1); and
   mixing a polyisocyanate curing agent (B) including the blocked polyisocyanate compound (B1) with an aminated epoxy resin (A) to prepare an aminated epoxy resin emulsion;
   wherein the blocked polyisocyanate compound (B1) is prepared by blocking a polyisocyanate compound selected from the group consisting of 1,5-pentamethylene diisocyanate and a multimer of 1,5-pentamethylene diisocyanate with a blocking agent; and
   the blocking agent includes one or more selected from the group consisting of an oxime compound, a pyrazole

compound, an imidazole compound, and a triazole compound.

## INTERNATIONAL SEARCH REPORT

International application No. **PCT/JP2024/039774**

**A. CLASSIFICATION OF SUBJECT MATTER**

***C09D 5/44***(2006.01)i; ***C09D 163/00***(2006.01)i
FI: C09D5/44 A; C09D163/00

According to International Patent Classification (IPC) or to both national classification and IPC

**B. FIELDS SEARCHED**

Minimum documentation searched (classification system followed by classification symbols)

C09D1/00-10/00;C09D101/00-201/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 61-235476 A (NIPPON PAINT CO., LTD.) 20 October 1986 (1986-10-20) claim 1, p. 3, lower left column, lines 17-18, p. 5, lower right column, lines 10-17, p. 7, upper left column, lines 4-16, p. 7, lower left column, lines 6-10, p. 8, upper right column, table 1 | 1-4 |
| A | JP 2005-041951 A (NISSAN MOTOR CO., LTD.) 17 February 2005 (2005-02-17) entire text, all drawings | 1-4 |

☐ Further documents are listed in the continuation of Box C.

☑ See patent family annex.

* Special categories of cited documents:

"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 December 2024** | **21 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/039774**

| Patent document cited in search report | Publication date (day/month/year) | Patent family member(s) | Publication date (day/month/year) |
|---|---|---|---|
| JP 61-235476 A | 20 October 1986 | (Family: none) | |
| JP 2005-041951 A | 17 February 2005 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019039467 A